# EUROPÄISCHE PATENTANMELDUNG

(11) **EP 4 001 813 A1**
(43) Veröffentlichungstag der Anmeldung: **25.05.2022**
(21) Anmeldenummer: 20209265.6
(22) Anmeldetag: 23.11.2020
(51) Int. Cl.: F26B 3/04, C02F 11/10, F23B 30/00, F23G 5/04, F26B 17/20, F26B 23/02, F26B 25/04

(54) **TROCKNUNGS- UND VERBRENNUNGSVORRICHTUNG**

(71) Anmelder: Grimm, Bernhard, 97753 Karlstadt (DE)
(72) Erfinder: Grimm, Bernhard, 97753 Karlstadt (DE)
(74) Vertreter: MERH-IP Matias Erny Reichl Hoffmann Patentanwälte PartG mbB

(57) **Zusammenfassung**

Es wird eine Trocknungs- und Verbrennungsvorrichtung (100, 200) zur Trocknung und Verbrennung von Material (131, 132, 231) beschrieben. Die Vorrichtung (100, 200) umfasst zumindest einen Raum (101, 102, 201) zur Aufnahme von Material (131, 132, 231), das in dem zumindest einen Raum (101, 102, 201) zumindest teilweise getrocknet und zumindest teilweise verbrannt wird. Des Weiteren umfasst die Vorrichtung (100, 200) zumindest einen Zuteiler (105, 106, 207), über den Material (131, 132, 231) in den zumindest einen Raum (101, 102, 201) einführbar ist, sowie zumindest einen Austrag (107, 108, 208), über den verarbeitetes Material (133, 134, 233), das in dem zumindest einen Raum (101, 102, 201) getrocknet und/oder verbrannt wurde, aus dem zumindest einen Raum (101, 102, 201) geleitet werden kann, sowie eine Reihe von Drehmitnehmern (110, 117, 202), die eingerichtet sind, das dem zumindest einen Raum (101, 102, 201) zugeführte Material (131, 132, 231) von dem Zuteiler (105, 106, 207) durch den zumindest einen Raum (101, 102, 201) zu dem Austrag (107, 108, 208) zu transportieren. Die Vorrichtung (100, 200) ist ausgebildet, thermische Energie, die bei der Verbrennung eines ersten Teils des Materials (131, 132, 231) entsteht, zur Trocknung eines zweiten Teils des Materials (131, 132, 231) zu nutzen.

## Beschreibung

Die Erfindung betrifft eine kombinierte Trocknungs- und Verbrennungsvorrichtung zur Trocknung und Verbrennung von Material, insbesondere von Abfällen.

In einem Industrieland entstehen an unterschiedlichen Stellen Abfallprodukte (z.B. Schlamm), die aus wirtschaftlichen und/oder umweltrelevanten Gründen getrocknet und/oder verbrannt werden müssen, z.B. um das Volumen der Abfallprodukte zu reduzieren und/oder um Schadstoffe aus den Abfallprodukten zu beseitigen.

Das vorliegende Dokument befasst sich mit der technischen Aufgabe, eine besonders effiziente und umweltfreundliche Trocknung und Verbrennung von Material, insbesondere von ein oder mehreren Abfallprodukten, zu ermöglichen. Die Aufgabe wird durch jeden der unabhängigen Ansprüche gelöst. Bevorzugte Ausgestaltungen sind in den abhängigen Ansprüchen beschrieben.

Gemäß einem Aspekt wird eine Trocknungs- und Verbrennungsvorrichtung zur Trocknung und Verbrennung von Material (z.B. von Klärschlamm oder Industrieschlamm) beschrieben. Die Vorrichtung ist dabei als Einheit ausgebildet, in der sowohl eine Trocknung als auch eine Verbrennung von Material erfolgt. Die Vorrichtung umfasst zumindest einen Raum zur Aufnahme von Material, wobei das Material in dem zumindest einen Raum zumindest teilweise getrocknet und zumindest teilweise verbrannt wird. Die Vorrichtung kann direkt aneinander angrenzende Verbrennungs- und Trocknungsräume aufweisen. Alternativ oder ergänzend kann die Vorrichtung einen kombinierten bzw. gemeinsamen Verbrennungs- und Trocknungsraum aufweisen. Der zumindest eine Raum kann zumindest teilweise oder vollständig feuerfest ausgekleidet sein.

Die Vorrichtung umfasst ferner zumindest einen Zuteiler (insbesondere einen Mehrklappenbeschicker), über den Material in den zumindest einen Raum einführbar ist. Des Weiteren umfasst die Vorrichtung zumindest einen Austrag, über den verarbeitetes (insbesondere verbranntes und/oder getrocknetes) Material, das in dem zumindest einen Raum getrocknet und/oder verbrannt wurde, aus dem zumindest einen Raum geleitet werden kann.

Außerdem umfasst die Vorrichtung eine Reihe von Drehmitnehmern, die eingerichtet sind, das dem zumindest einen Raum zugeführte Material von dem Zuteiler durch den zumindest einen Raum zu dem Austrag zu transportieren. Das Material kann entlang der Transportstrecke getrocknet und/oder verbrannt werden. Ein Drehmitnehmer kann zumindest eine um eine Drehachse drehbar gelagerte Schaufel aufweisen, die ausgebildet ist, Material mitzunehmen. Die Drehachse kann parallel zu dem Boden des zumindest einen Raums angeordnet sein. Die Schaufel des Drehmitnehmers kann ausgebildet sein, Material von einer (hinteren) Seite des Drehmitnehmers zu einer anderen (vorderen) Seite des Drehmitnehmers zu fördern.

Die Reihe von Drehmitnehmern kann ausgebildet sein, das dem zumindest einen Raum zugeführte Material (während des Transports) umzuwälzen. So kann eine besonders zuverlässige Trocknung und/oder Verbrennung des Materials innerhalb des zumindest einen Raums bewirkt werden.

Die Vorrichtung kann ausgebildet sein, thermische Energie, die bei der Verbrennung eines ersten Teils des Materials entsteht, zur Trocknung eines zweiten Teils des Materials zu nutzen. Insbesondere kann Rauchgas, das bei der Verbrennung des ersten Teils des Materials entsteht, dazu genutzt werden, den zweiten Teil des Materials zu trocknen. So können eine besonders zuverlässige und effiziente Trocknung und Verbrennung von Material ermöglicht werden.

Die Vorrichtung kann derart ausgebildet sein, dass das Rauchgas, das bei der Verbrennung des ersten Teils des Materials entsteht, mit Trocknungsgas, das bei der Trocknung des zweiten Teils des Materials entsteht, insbesondere Ammoniak und/oder Kohlenwasserstoffe aus dem Trocknungsprozess, vermischt wird. Insbesondere kann die Vorrichtung eingerichtet sein, das Rauchgas und das Trocknungsgas gemeinsam nachzuverarbeiten, insbesondere gemeinsam zu verbrennen. Durch das Mischen und/oder das gemeinsame Verarbeiten der Gase aus dem Verbrennungs- und dem Trocknungsprozess kann eine besonders effiziente und umfassende Verarbeitung der Abgase der Vorrichtung ermöglicht werden.

Die Vorrichtung kann eine Nachbrennkammer umfassen, die eingerichtet ist, das Rauchgas, das bei der Verbrennung des ersten Teils des Materials entsteht, und/oder das Trocknungsgas aus dem Trocknungsprozess zu verbrennen, um ein Abgas zu erzeugen. So können Geruchsbildung und/oder Schadstoffe in zuverlässiger Weise reduziert werden.

Die Nachbrennkammer kann ein oder mehrere Trennwände mit jeweils ein oder mehreren Öffnungen aufweisen, die ausgebildet sind, Turbulenzen des Rauchgases und/oder des Trocknungsgases in der Nachbrennkammer zu bewirken. So kann eine besonders zuverlässige und vollständige Verbrennung des Rauchgases und/oder des Trocknungsgases bewirkt werden.

Die Vorrichtung kann einen Wärmetauscher umfassen, der eingerichtet ist, dem Abgas aus der Nachbrennkammer thermische Energie zu entziehen. Des Weiteren kann die Vorrichtung eingerichtet sein, die dem Abgas entzogene thermische Energie zumindest teilweise zur Trocknung des zweiten Teils des Materials zu nutzen. So kann die Energieeffizienz der Vorrichtung weiter erhöht werden.

Die Vorrichtung kann zumindest einen Brenner umfassen, der eingerichtet ist, eine Verbrennung in dem zumindest einen Raum zu bewirken. Der Brenner kann insbesondere dazu genutzt werden, einen Verbrennungsprozess in der Vorrichtung zu initiieren. So kann die Zuverlässigkeit des Betriebs der Vorrichtung weiter erhöht werden.

Die Vorrichtung kann zumindest einen Lufteinlass zur Zuführung von (ggf. vorgewärmter) Verbrennungs- und/oder Trocknungsluft zu dem zumindest einen Raum umfassen. So können besonders zuverlässige Verbrennungs- und/oder Trocknungsprozesse ermöglicht werden.

Die Vorrichtung kann einen Verbrennungsraum zur Verbrennung des ersten Teils des Materials und einen von dem Verbrennungsraum durch eine Zwischenwand getrennten Trocknungsraum zur Trocknung des zweiten Teils des Materials umfassen. Der Verbrennungsraum und der Trocknungsraum können ggf. direkt aneinander angrenzen. Des Weiteren kann die Vorrichtung zumindest eine Öffnung in der Zwischenwand umfassen, wobei die Öffnung derart ausgebildet ist, dass durch die Öffnung Rauchgas, das bei der Verbrennung des ersten Teils des Materials in dem Verbrennungsraum entsteht, oder ein von dem Rauchgas abgeleitetes Abgas in den Verbrennungsraum gelangen kann, um den zweiten Teil des Materials im Trocknungsraum zu trocknen. So kann eine besonders zuverlässige Nutzung der thermischen Energie aus der Verbrennung für die Trocknung verwendet werden. Ferner können durch die Verwendung getrennter Verbrennungs- und Trocknungsräume getrennte Endprodukte erzeugt und weiterverwertet werden.

Die Vorrichtung kann insbesondere einen ersten Zuteiler zu dem Verbrennungsraum und einen ersten Austrag aus dem Verbrennungsraum umfassen. Ferner kann die Vorrichtung eine erste Reihe von Drehmitnehmern umfassen, die eingerichtet sind, ein dem Verbrennungsraum zugeführtes Verbrennungsmaterial (d.h. den ersten Teil des Materials) von dem ersten Zuteiler durch den Verbrennungsraum zu dem ersten Austrag zu transportieren (und dabei ggf. umzuwälzen), so dass an dem ersten Austrag Asche des Verbrennungsmaterials bereitgestellt wird. So kann ein besonders zuverlässiger Verbrennungsprozess ermöglicht werden.

Des Weiteren kann die Vorrichtung einen zweiten Zuteiler zu dem Trocknungsraum und einen zweiten Austrag aus dem Trocknungsraum umfassen. Ferner kann die Vorrichtung eine zweite Reihe von Drehmitnehmern umfassen, die eingerichtet sind, ein dem Trocknungsraum zugeführtes Trocknungsmaterial (d.h. den zweiten Teil des Materials)) von dem zweiten Zuteiler durch den Trocknungsraum zu dem zweiten Austrag zu transportieren (und dabei ggf. umzuwälzen), so dass an dem zweiten Austrag getrocknetes Trocknungsmaterial bereitgestellt wird. So kann ein besonders zuverlässiger Trocknungsprozess ermöglicht werden.

Die Vorrichtung kann eine zwischen dem Verbrennungsraum und dem Trocknungsraum angeordnete Nachbrennkammer umfassen, die eingerichtet ist, das Rauchgas zu verbrennen, um das Abgas zu erzeugen, das dem Trocknungsraum zugeführt wird. So kann die Reaktivität des Gases aus dem Verbrennungsprozess reduziert werden, um einen besonders zuverlässigen Trocknungsprozess in dem Trocknungsraum zu ermöglichen.

Alternativ oder ergänzend kann die Vorrichtung einen gemeinsamen und/oder kombinierten Verbrennungs- und Trocknungsraum aufweisen. Die Reihe von Drehmitnehmern kann dann ausgebildet sein, das dem gemeinsamen Verbrennungs- und Trocknungsraum zugeführte Material von einem dem Zuteiler zugewandten Trocknungsbereich des gemeinsamen Verbrennungs- und Trocknungsraums zu einem dem Austrag zugewandten Verbrennungsbereich des gemeinsamen Verbrennungs- und Trocknungsraums zu transportieren (und dabei ggf. umzuwälzen). Durch die Verwendung eines gemeinsamen Verbrennungs- und Trocknungsraums kann eine besonders effiziente Trocknungs- und Verbrennungsvorrichtung bereitgestellt werden.

Der gemeinsame Verbrennungs- und Trocknungsraum kann durch ein oder mehrere Wände begrenzt sein. Die Vorrichtung kann an zumindest einer Wand des gemeinsamen Verbrennungs- und Trocknungsraums im Trocknungsbereich ein Heizelement umfassen, das eingerichtet ist, die Wand und/oder das an die Wand angrenzende Material zu erwärmen. So kann eine besonders zuverlässige Trocknung bewirkt werden.

Gemäß einem weiteren Aspekt wird ein Verfahren zur Trocknung und Verbrennung von Material innerhalb einer kombinierten Trocknungs- und Verbrennungsvorrichtung beschrieben. Die Trocknungs- und Verbrennungsvorrichtung kann wie in diesem Dokument beschrieben ausgebildet sein. Das Verfahren umfasst das Zuführen von Material in den zumindest einen Raum der Vorrichtung, wobei das Material in dem zumindest einen Raum zumindest teilweise getrocknet und zumindest teilweise verbrannt wird. Des Weiteren umfasst das Verfahren das Nutzen von thermischer Energie, die bei der Verbrennung eines ersten Teils des Materials entsteht, zur Trocknung eines zweiten Teils des Materials.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Desweiteren können jegliche Aspekte der in diesem Dokument beschriebenen Verfahren, Vorrichtung und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigt
Fig. 1 eine beispielhafte Trocknungs- und Verbrennungsvorrichtung mit getrennten Verbrennungs- und Trocknungsräumen;
Fig. 2 eine beispielhafte Trocknungs- und Verbrennungsvorrichtung mit einem gemeinsamen Trocknungs- und Verbrennungsraum; und
Fig. 3 ein Ablaufdiagramm eines beispielhaften Verfahrens zur Trocknung und Verbrennung von Material.

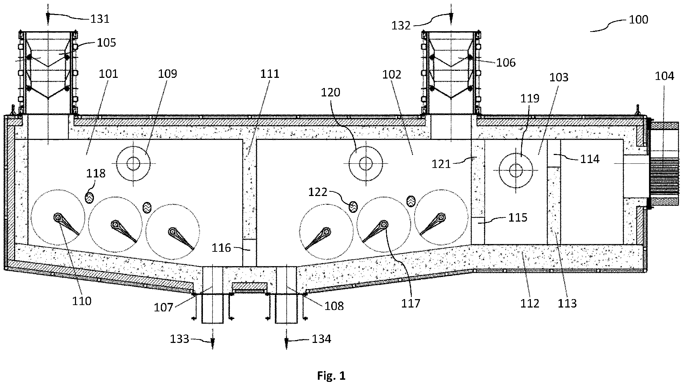

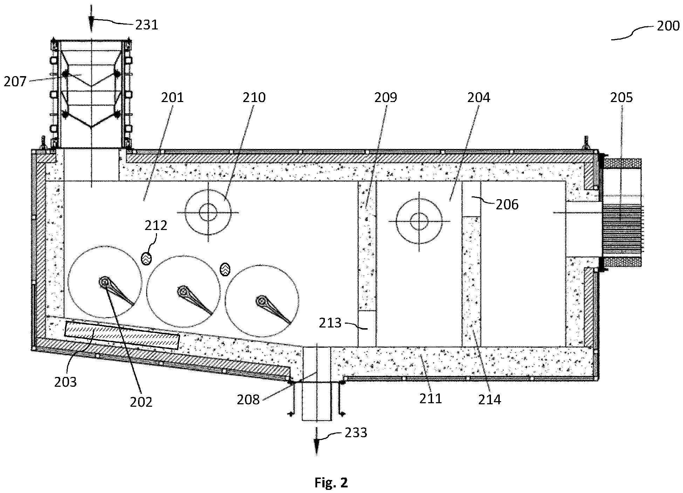

Wie eingangs dargelegt, befasst sich das vorliegende Dokument mit der effizienten und zuverlässigen Trocknung und Verbrennung von Material, insbesondere von ein oder mehreren Abfallprodukten (wie etwa Klär- und/oder Industrischlamm). In diesem Zusammenhang zeigt Fig. 1 eine beispielhafte Trocknungs- und Verbrennungsvorrichtung 100 mit getrennten Verbrennungs- und Trocknungsräumen 101, 102. Fig. 2 zeigt eine beispielhafte Trocknungs- und Verbrennungsvorrichtung 200 mit einem gemeinsamen Trocknungs- und Verbrennungsraum 201.

Die in Fig. 1 dargestellte Vorrichtung 100 umfasst einen Zugang bzw. einen Zuteiler 105 für ein Verbrennungsprodukt bzw. Verbrennungsmaterial 131, der ausgebildet ist, das Verbrennungsmaterial 131 von außen in den Verbrennungsraum 101 zu leiten. Der Zuteiler 105 kann einen Mehrfachklappenbeschicker umfassen. Des Weiteren umfasst die Vorrichtung 100 einen Zugang bzw. einen Zuteiler 106 für ein Trocknungsprodukt bzw. Trocknungsmaterial 132, der ausgebildet ist, das Trocknungsmaterial 132 in den Trocknungsraum 102 zu leiten. Der Zuteiler 106 kann einen Mehrfachklappenbeschicker umfassen.

Der Verbrennungsraum 101 und/oder der Trocknungsraum 102 können jeweils ein oder mehreren Lufteintritte 118, 122 für Luft in den jeweiligen Raum 101, 102 umfassen.

Des Weiteren können der Verbrennungsraum 101 und/oder der Trocknungsraum 102 jeweils ein oder mehrere Drehmitnehmer 110, 117 aufweisen, die eingerichtet sind, das jeweilige Material 131, 312 durch den jeweiligen Raum 101, 102 zu transportieren und dabei ggf. umzuschichten. Insbesondere kann das jeweilige Material 131, 132 von dem jeweiligen Zuteiler 105, 106 zu einem Austrag 107, 108 des jeweiligen Raums 101, 102 transportiert werden. Am Austrag 107 des Verbrennungsraums 101 kann Asche 133 bereitgestellt werden. Am Austrag 108 des Trocknungsraums 102 kann ein getrocknetes Trocknungsmaterial 134 bereitgestellt werden.

Der Verbrennungsraum 101 kann ein oder mehrere Brenner 109 aufweisen, die eingerichtet sind, eine Flamme innerhalb des Verbrennungsraums 101 bereitzustellen, um eine Verbrennung des Verbrennungsprodukts 131 zu bewirken bzw. zu initiieren.

Der Verbrennungsraum 101 und der Trocknungsraum 102 können eine gemeinsame Zwischenwand 111 aufweisen, die die beiden Räume 101, 102 voneinander trennt. Die Zwischenwand 111 kann ein oder mehrere Wandöffnungen 116 aufweisen, durch die bei der Verbrennung im Verbrennungsraum 101 entstehendes Rauchgas von dem Verbrennungsraum 101 in den Trocknungsraum 102 gelangen kann. Die thermische Energie des Rauchgases aus dem Verbrennungsraum 101 kann dazu genutzt werden, das Trocknungsmaterial 132 in dem Trocknungsraum 102 zu trocknen. So kann eine energieeffiziente Trocknung bewirkt werden. Ferner kann thermische Energie zur Trocknung durch ein oder mehrere Brenner 120 im Trocknungsraum 102 generiert werden.

Die Vorrichtung 100 kann ggf. zwischen dem Verbrennungsraum 101 und dem Trocknungsraum 102 eine Nachbrennkammer (nicht dargestellt) aufweisen, in der das Rauchgas aus dem Verbrennungsraum 101 weiter verbrannt werden kann, um eine möglichst vollständige Verbrennung des Rauchgases zu bewirken. So können umweltschädliche Anteile in dem Rauchgas reduziert werden. Das weiter verbrannte Rauchgas, d.h. das Abgas, kann dann in den Trocknungsraum 102 geleitet werden, um die thermische Energie des Abgases zur Trocknung des Trocknungsprodukts 132 zu nutzen.

Alternativ oder ergänzend kann die Vorrichtung 100, wie in Fig. 1 dargestellt, eine Nachbrennkammer 103 aufweisen, die über eine Trennwand 121 von dem Trocknungsraum 102 abgetrennt ist. Das Rauchgas kann über ein oder mehrere Öffnungen 115 in der Trennwand 121 aus dem Trocknungsraum 102 in die Nachbrennkammer 103 geleitet werden, um eine weitere Verbrennung des Rauchgases und ggf. von Trocknungsgase aus dem Trocknungsprozess in der Nachbrennkammer 103 zu ermöglichen. Die Nachbrennkammer 103 kann zu diesem Zweck ein oder mehrere Brenner 119 aufweisen. Das (weiter verbrannte) Rauchgas kann über eine weitere Öffnung 114 in einer Zwischenwand 113 zu einem Wärmetauscher 104 geleitet werden, wobei der Wärmetauscher 104 eingerichtet ist, thermische Energie aus dem weiter verbrannten Rauchgas, d.h. dem Abgas, aufzunehmen, bevor das Abgas aus der Vorrichtung 100 geleitet wird.

Die Vorrichtung 100 kann eine feuerfeste Auskleidung bzw. Hülle 112 umfassen, die den Verbrennungsraum 101, den Trocknungsraum 102 und/oder die optionale Nachbrennkammer 103 zumindest teilweise oder vollständig umschließt.

Die in Fig. 1 dargestellte Vorrichtung 100 kann eingerichtet sein, heizwertreiches erstes Material 131 durch einen Mehrfachklappenbeschicker 105 oder durch einen anderen Zuteiler 105 in dem Verbrennungsraum 101 aufzunehmen. Der Mehrfachklappenbeschicker / Zuteiler 105 kann dabei derart ausgebildet sein, dass Wärme und Feuer aus dem Verbrennungsraum 102 nicht nach außen gelangen. Der Mehrfachklappenbeschicker 105 kann mit oder ohne einer Wasserkühlung ausgeführt sein.

Durch die Verbrennung des zugeführten ersten Materials 131 im Verbrennungsraum 101 wird heißes Rauchgas erzeugt, das für die Trocknung eines zweiten Materials 132 im Trocknungsraum 102 verwendet werden kann. Das heiße Rauchgas aus dem Verbrennungsraum 101 kann in den durch eine Zwischenwand 111 mit Öffnung 116 getrennten Trocknungsraum 102 gelangen. Drehmitnehmersysteme 110, z.B. 3 oder mehr Drehmitnehmer 110, können dabei für einen zuverlässigen Stoff- und Wärmeübergang sorgen. Die einzelnen Drehmitnehmer 110 können einzeln angesteuert und können ausgebildet sein, das Material 131 vorwärts und/oder rückwärts zu bewegen. Zum Schutz der Achse eines Drehmitnehmers 110 vor Überhitzung, kann die Achse mit Wasser gekühlt sein.

Der Materialfluss innerhalb des Verbrennungsraums 102 ist von der Beschickung 105 zur Entaschung 107. Die Drehmitnehmer 110 sorgen für den Transport des Materials 131 in dem Verbrennungsraum 101. Die Verbrennungsluft kann seitlich in den Trocknungs- und/oder Verbrennungsraum 101, 102 eingebracht werden.

Ein feuchtes Material 132 kann durch einen Mehrfachklappenbeschicker 106 oder einem anderen Zuteiler in den Trocknungsraum 102 geleitet werden. Der Mehrfachklappenbeschicker / Zuteiler 106 kann dabei bewirken, dass Wärme nicht nach außen gelangt. Der Mehrfachklappenbeschicker 106 kann mit oder ohne Wasserkühlung ausgeführt sein.

Drehmitnehmersysteme 117, z.B. 3 oder mehr Drehmitnehmer 117, können dazu genutzt werden, im Trocknungsraum 102 für einen guten Stoff- und Wärmeübergang zu sorgen. Die Drehmitnehmer 117 können einzeln angesteuert werden und können ausgebildet sein, das Material 132 vorwärts und/oder rückwärts zu bewegen. Zum Schutz der Drehmitnehmerachse vor Überhitzung kann diese mit Wasser gekühlt sein.

Der Materialfluss innerhalb des Trocknungsraums 102 ist von der Beschickung 106 zum Produktaustrag 108. Die Drehmitnehmer 117 können dabei für den Transport des Materials 132 im Trocknungsraum 102 sorgen.

Die Trocknungswärme kann mittels heißem Rauchgas aus der Verbrennungskammer 101 in den Trocknungsraum 102 eingebracht werden. Zusätzliche Trocknungsluft kann seitlich in den Trocknungsraum eingebracht werden (über ein oder mehrere Eintritte 122). Durch das Zusammenbringen von Rauchgas und Trocknungsgas kann ferner eine Reduktion von NOx bewirkt werden.

Durch die Vorrichtung 100 werden zwei getrennte Produkte 133, 134 erzeugt. Ein Entaschungsprodukt 133 wird aus dem Verbrennungsraum 101 ausgetragen. Ferner wird das getrocknete Produkt 134 aus dem Trocknungsraum 102 ausgetragen.

Das im Trocknungsraum 102 verwendete Rauchgas kann über eine Öffnung 115 in der Trennwand 121 zur Nachbrennkammer 103 abgeführt werden. Dort kann das Rauchgas mit ein oder mehreren Brennern 119 auf eine gewünschte Ziel-Temperatur gebracht und mit Luftsauerstoff gemischt werden. Damit kann eine vollständige Verbrennung des Rauchgases sichergestellt werden. Öffnungen 114 in ein oder mehreren Trennwänden 113 der Nachbrennkammer 103 können bewirken, dass es zu Turbulenzen und somit zu einer effizienten Vermischung des Rauchgases innerhalb der Nachbrennkammer 103 kommt.

Die nicht von außen beheizten Flächen der Vorrichtung 100 können mit einer feuerfesten Auskleidung 112 versehen sein. In einem optionalen Wärmetauscher 104 kann das heiße Rauchgas heruntergekühlt werden. Mit dem Wärmetauscher 104 kann ein Wärmeträger (Luft oder Thermalöl oder Wasser oder Dampf) aufgeheizt werden.

Ein oder mehrere Brenner 109, 119, 120 können zum Anfahren der Anlage bzw. Vorrichtung 100 genutzt werden, oder in dem Fall, dass eine eingestellte Solltemperatur nicht erreicht wird.

Wie bereits oben dargelegt, kann die Nachbrennkammer 103 alternativ oder ergänzend zwischen Verbrennungs- und Trocknungsraum 101, 102 angeordnet sein. Dies kann insbesondere kann erfolgen, wenn das Trocknungsmaterial 132 nicht mit Rauchgas in Berührung gebracht werden soll, das nicht vollständig oxidiert ist. In dem Fall, dass das Trocknungsprodukt 132 noch Kohlenwasserstoffe oder andere brennbaren Anteile enthält, kann eine nachgeschaltete Nachbrennkammer 103 verwendet werden, um auch das Trocknungsgas zu verbrennen.

Fig. 2 zeigt eine Trocknungs- und Verbrennungsvorrichtung 200 mit einem gemeinsamen Trocknungs- und Verbrennungsraum 201. Über einen Zuteiler 207, insbesondere einen Mehrfachklappenbeschicker, wird ein feuchtes Material 231 in den Trocknungs- und Verbrennungsraum 201 geleitet. In dem Trocknungs- und Verbrennungsraum 201 sind Drehmitnehmer 202 angeordnet, durch die das Material 231 entlang einer Trocknungs- und Verbrennungsstrecke zu einem Austrag 208 des Trocknungs- und Verbrennungsraums 201 transportiert werden kann. Der Trocknungs- und Verbrennungsraum 201 kann eine feuerfeste Auskleidung 211 aufweisen.

Entlang der Trocknungs- und Verbrennungstrecke kann das Material 231 zunächst getrocknet werden. Zu diesem Zweck kann thermische Energie des bei der anschließenden Verbrennung bewirkten Rauchgases verwendet werden. Alternativ oder ergänzend kann an einer Wand, insbesondere an dem Boden, des Trocknungs- und Verbrennungsraums 201 ein Heizelement 203 angeordnet sein, das ausgebildet ist, das Material 231 zu erwärmen und zu trocknen. Alternativ oder ergänzend kann über einen Eintritt 212 vorgeheizte Verbrennungs- und/oder Trocknungsluft in den Trocknungs- und Verbrennungsraum 201 geleitet werden.

In einem zweiten Abschnitt der Trocknungs- und Verbrennungsstrecke kann dann eine Verbrennung des (getrockneten) Materials 231 bewirkt werden. Zu diesem Zweck können ein oder mehrere Brenner 210 in dem Trocknungs- und Verbrennungsraum 201 angeordnet sein, insbesondere um die Verbrennung zu initiieren. An dem Austrag 208 kann dann Asche 233 als Produkt bereitgestellt werden.

Die bei der Trocknung- und/oder Verbrennung entstehenden Gase können über eine Öffnung 213 in einer Trennwand von dem Trocknungs- und Verbrennungsraum 201 in einen Nachbrennkammer 204 geleitetet werden, in der eine weitere Verbrennung der Gase bewirkt werden kann. Zu diesem Zweck kann die Nachbrennkammer 204 ein oder mehrere Brenner umfassen. Durch ein oder mehrere Öffnungen 206 in einer weiteren Trennwand 214 können Turbulenzen in der Nachbrennkammer 204 bewirkt werden, um eine zuverlässige Verbrennung der Gase zu bewirken. Ein Wärmetauscher 205 kann dazu verwendet werden, den weiter verbrannten Gasen, d.h. dem Abgas, thermische Energie zu entziehen.

Es kann somit feuchtes Material 231 durch einen Mehrfachklappenbeschicker 207 oder durch einen anderen Zuteiler in den Trocknungs- und Verbrennungsraum 201 gegeben werden. Der Mehrfachklappenbeschicker / Zuteiler 207 kann dabei gewährleisten, dass Wärme und Feuer nicht nach außen gelangen. Der Mehrfachklappenbeschicker 207 kann mit oder ohne Wasserkühlung ausgeführt werden.

Die Vorrichtung 200 kann Drehmitnehmersysteme 202, insbesondere drei oder mehr Drehmitnehmer, umfassen, die für einen guten Stoff- und Wärmeübergang sorgen. Die Drehmitnehmer 202 können einzeln angesteuert werden und können ausgebildet sein, das Material 231 vorwärts und/oder rückwärts zu bewegen. Zum Schutz einer Drehmitnehmerachse vor Überhitzung kann diese mit Wasser gekühlt sein.

Der Materialfluss durch die Vorrichtung 200 ist von der Beschickung 207 zur Entaschung 208. Die Drehmitnehmer 202 sorgen für den Transport des Materials 231 in dem Trocknungs- und Verbrennungsraum 201. Die Trocknungswärme kann über einen beheizten Doppelboden und/oder über eine beheizte Doppeldecke und/oder über eine beheizte Doppelseitenwand 203 und/oder durch eine vorgeheizte Verbrennungsluft (über den Einlass 212) eingebracht werden. Ggf. kann auf die Beheizung verzichtet werden, wenn heizwertreiches trockenes Material zum feuchten Material 231 zugemischt wird.

Die Verbrennungsluft kann seitlich über einen Einlass 212 in den Trocknungs- und Verbrennungsraum 201 eingebracht werden. Nachdem die Trocknungsphase durchschritten ist, fängt das (getrocknete) Material 231 typischerweise an zu brennen. Die Verbrennungsasche 233 kann mittels einer trockenen oder nassen Entaschung 208 abgeführt werden.

Ein oder mehrere Brenner 210 können zum Anfahren der Anlage bzw. Vorrichtung 200 verwendet werden, oder in dem Fall, dass die eingestellte Solltemperatur nicht erreicht wird.

Das im Trocknungs- und Verbrennungsraum 201 entstandene Rauchgas kann über eine Öffnung 213 in der Trennwand 209 zur Nachbrennkammer 204 abgeführt werden. Dort wird das Rauchgas mit Luftsauerstoff gemischt. Damit wird eine vollständige Verbrennung sichergestellt. Ein oder mehrere Öffnungen 206 in ein oder mehrere Trennwänden 214 der Nachbrennkammer 204 können bewirken, dass sich in der Nachbrennkammer 204 Turbulenzen für eine effiziente Vermischung mit dem Luftsauerstoff bilden.

Die nicht von außen beheizten Flächen der Vorrichtung 200 können mit einer feuerfesten Ausmauerung 211 versehen sein. In einem Wärmetauscher 205 kann das heiße Rauchgas heruntergekühlt werden. Mit dem Wärmetauscher 205 kann ein Wärmeträger (z.B. Luft oder Thermalöl oder Wasser oder Dampf) aufgeheizt werden, der wiederum als Heizmedium für den Trocknungsvorgang verwendet werden kann.

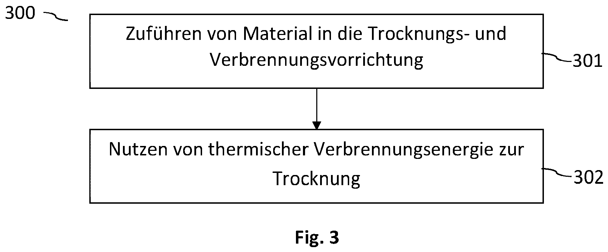

Fig. 3 zeigt ein Ablaufdiagramm eines beispielhaften Verfahrens 300 zur Trocknung und Verbrennung von Material 131, 132, 231 innerhalb einer kombinierten Trocknungs- und Verbrennungsvorrichtung 100, 200.

Die Vorrichtung 100, 200 umfasst innerhalb einer einzigen Anlage und/oder als Teil einer gemeinsamen Einheit zumindest einen Raum 101, 102, 201 zur Aufnahme von Material 131, 132, 231. Insbesondere kann die Vorrichtung 100, 200 einen gemeinsamen Verbrennungs- und Trocknungsraum 201 und/oder einen Verbrennungsraum 101 aufweisen, der direkt an einen Trocknungsraum 102 angrenzt.

Die Vorrichtung 100, 200 umfasst ferner zumindest einen Zuteiler 105, 106, 207 (insbesondere zumindest einen Mehrfachklappenbeschicker), über den Material 131, 132, 231 in den zumindest einen Raum 101, 102, 201 einführbar ist. Des Weiteren umfasst die Vorrichtung 100, 200 zumindest einen Austrag 107, 108, 208, über den verarbeitetes Material 133, 134, 233, das in dem zumindest einen Raum 101, 102, 201 getrocknet und/oder verbrannt wurde, aus dem zumindest einen Raum 101, 102, 201 geleitet werden kann. Außerdem umfasst die Vorrichtung 100, 200 eine Reihe von (insbesondere drei oder mehr) Drehmitnehmern 110, 117, 202, die eingerichtet sind, das dem zumindest einen Raum 101, 102, 201 zugeführte Material 131, 132, 231 von dem Zuteiler 105, 106, 207 durch den zumindest einen Raum 101, 102, 201 zu dem Austrag 107, 108, 208 zu transportieren (und dabei ggf. umzuwälzen). Entlang dieser Transportstrecke kann eine Trocknung und/oder Verbrennung des Material 131, 132, 231 erfolgen.

Das Verfahren 300 umfasst das Zuführen 301 von Material 131, 132, 231 in den zumindest einen Raum 101, 102, 201. Das Material 131, 132, 231 wird in dem zumindest einen Raum 101, 102, 201 zumindest teilweise getrocknet und zumindest teilweise verbrannt (entlang der Transportstrecke).

Des Weiteren umfasst das Verfahren 300 das Nutzen 302 von thermischer Energie, die bei der Verbrennung eines ersten Teils des Materials 131, 132, 231 (insbesondere des Verbrennungsmaterials 131) entsteht, zur Trocknung eines zweiten Teils des Materials 131, 132, 231 (insbesondere des Trocknungsmaterials 132). Zu diesem Zweck kann insbesondere das bei der Verbrennung entstehende Rauchgas genutzt werden, um den zweiten Teil des Materials 131, 132, 231 zu erwärmen und zu trocknen.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen.

## Patentansprüche

1. Trocknungs- und Verbrennungsvorrichtung (100, 200) zur Trocknung und Verbrennung von Material (131, 132, 231); wobei die Vorrichtung (100, 200) umfasst,
- zumindest einen Raum (101, 102, 201) zur Aufnahme von Material (131, 132, 231), das in dem zumindest einen Raum (101, 102, 201) zumindest teilweise getrocknet und zumindest teilweise verbrannt wird;
- zumindest einen Zuteiler (105, 106, 207), über den Material (131, 132, 231) in den zumindest einen Raum (101, 102, 201) einführbar ist;
- zumindest einen Austrag (107, 108, 208), über den verarbeitetes Material (133, 134, 233), das in dem zumindest einen Raum (101, 102, 201) getrocknet und/oder verbrannt wurde, aus dem zumindest einen Raum (101, 102, 201) geleitet werden kann; und
- eine Reihe von Drehmitnehmern (110, 117, 202), die eingerichtet sind, das dem zumindest einen Raum (101, 102, 201) zugeführte Material (131, 132, 231) von dem Zuteiler (105, 106, 207) durch den zumindest einen Raum (101, 102, 201) zu dem Austrag (107, 108, 208) zu transportieren; wobei die Vorrichtung (100, 200) ausgebildet ist, thermische Energie, die bei der Verbrennung eines ersten Teils des Materials (131, 132, 231) entsteht, zur Trocknung eines zweiten Teils des Materials (131, 132, 231) zu nutzen.

2. Trocknungs- und Verbrennungsvorrichtung (100, 200) gemäß Anspruch 1, wobei die Vorrichtung (100, 200) derart ausgebildet ist, dass Rauchgas, das bei der Verbrennung des ersten Teils des Materials (131, 132, 231) entsteht, mit Trocknungsgas, das bei der Trocknung des zweiten Teils des Materials (131, 132, 231) entsteht, vermischt wird.

3. Trocknungs- und Verbrennungsvorrichtung (100, 200) gemäß Anspruch 2, wobei die Vorrichtung (100, 200) eingerichtet ist, das Rauchgas und das Trocknungsgas gemeinsam nachzuverarbeiten, insbesondere gemeinsam zu verbrennen.

4. Trocknungs- und Verbrennungsvorrichtung (100, 200) gemäß einem der vorhergehenden Ansprüche, wobei die Vorrichtung (100, 200) eine Nachbrennkammer (103, 204) umfasst, die eingerichtet ist, Rauchgas, das bei der Verbrennung des ersten Teils des Materials (131, 132, 231) entsteht, zu verbrennen, um ein Abgas zu erzeugen.

5. Trocknungs- und Verbrennungsvorrichtung (100, 200) gemäß Anspruch 4, wobei die Nachbrennkammer (103, 204) ein oder mehrere Trennwände (113, 214) mit jeweils ein oder mehreren Öffnungen (114, 206) aufweist, die ausgebildet sind, Turbulenzen des Rauchgases in der Nachbrennkammer (103, 204) zu bewirken.

6. Trocknungs- und Verbrennungsvorrichtung (100, 200) gemäß einem der Ansprüche 4 bis 5, wobei
- die Vorrichtung (100, 200) einen Wärmetauscher (104, 205) umfasst, der eingerichtet ist, dem Abgas aus der Nachbrennkammer (103, 204) thermische Energie zu entziehen; und
- die Vorrichtung (100, 200) insbesondere eingerichtet ist, die dem Abgas entzogene thermische Energie zumindest teilweise zur Trocknung des zweiten Teils des Materials (131, 132, 231) zu nutzen.

7. Trocknungs- und Verbrennungsvorrichtung (100, 200) gemäß einem der vorhergehenden Ansprüche, wobei die Vorrichtung (100, 200) zumindest einen Brenner (109, 119, 120, 210) umfasst, der eingerichtet ist, eine Verbrennung in dem zumindest einen Raum (101, 102, 201) zu bewirken.

8. Trocknungs- und Verbrennungsvorrichtung (100, 200) gemäß einem der vorhergehenden Ansprüche, wobei die Vorrichtung (100, 200) zumindest einen Lufteinlass (118, 122, 212) zur Zuführung von Verbrennungs- und/oder Trocknungsluft zu dem zumindest einen Raum (101, 102, 201) umfasst.

9. Trocknungs- und Verbrennungsvorrichtung (100, 200) gemäß einem der vorhergehenden Ansprüche, wobei die Reihe von Drehmitnehmern (202) ausgebildet ist, das dem zumindest einen Raum (101, 102, 201) zugeführte Material (131, 132, 231) umzuwälzen.

10. Trocknungs- und Verbrennungsvorrichtung (100, 200) gemäß einem der vorhergehenden Ansprüche, wobei die Vorrichtung (100) umfasst,
- einen Verbrennungsraum (101) zur Verbrennung des ersten Teils des Materials (131, 132, 231);
- einen von dem Verbrennungsraum (101) durch eine Zwischenwand (111) getrennten Trocknungsraum (102) zur Trocknung des zweiten Teils des Materials (131, 132, 231);
- zumindest eine Öffnung (116) in der Zwischenwand (111); wobei die Öffnung (116) derart ausgebildet ist, dass durch die Öffnung (116) Rauchgas, das bei der Verbrennung des ersten Teils des Materials (131, 132, 231) in dem Verbrennungsraum (101) entsteht, oder ein von dem Rauchgas abgeleitetes Abgas in den Verbrennungsraum (101) gelangen kann, um den zweiten Teil des Materials (131, 132, 231) im Trocknungsraum (102) zu trocknen.

11. Trocknungs- und Verbrennungsvorrichtung (100, 200) gemäß Anspruch 10, wobei die Vorrichtung (100) umfasst,
- einen ersten Zuteiler (105) zu dem Verbrennungsraum (101) und einen ersten Austrag (107) aus dem Verbrennungsraum (101);
- eine erste Reihe von Drehmitnehmern (110), die eingerichtet sind, ein dem Verbrennungsraum (101) zugeführtes Verbrennungsmaterial (131) von dem ersten Zuteiler (105) durch den Verbrennungsraum (101) zu dem ersten Austrag (107) zu transportieren, so dass an dem ersten Austrag (107) Asche (133) des Verbrennungsmaterials (131) bereitgestellt wird;
- einen zweiten Zuteiler (106) zu dem Trocknungsraum (102) und einen zweiten Austrag (108) aus dem Trocknungsraum (102); und
- eine zweite Reihe von Drehmitnehmern (117), die eingerichtet sind, ein dem Trocknungsraum (102) zugeführtes Trocknungsmaterial (132) von dem zweiten Zuteiler (106) durch den Trocknungsraum (102) zu dem zweiten Austrag (108) zu transportieren, so dass an dem zweiten Austrag (108) getrocknetes Trocknungsmaterial (134) bereitgestellt wird.

12. Trocknungs- und Verbrennungsvorrichtung (100, 200) gemäß einem der Ansprüche 10 bis 11, wobei die Vorrichtung (100) eine zwischen dem Verbrennungsraum (101) und dem Trocknungsraum (102) angeordnete Nachbrennkammer (103) umfasst, die eingerichtet ist, das Rauchgas zu verbrennen, um das Abgas zu erzeugen, das dem Trocknungsraum (102) zugeführt wird.

13. Trocknungs- und Verbrennungsvorrichtung (100, 200) gemäß einem der Ansprüche 1 bis 9, wobei
- die Vorrichtung (200) einen gemeinsamen Verbrennungs- und Trocknungsraum (201) aufweist;
- die Reihe von Drehmitnehmern (202) ausgebildet ist, das dem gemeinsamen Verbrennungs- und Trocknungsraum (201) zugeführte Material (231) von einem dem Zuteiler (207) zugewandten Trocknungsbereich des gemeinsamen Verbrennungs- und Trocknungsraums (201) zu einem dem Austrag (208) zugewandten Verbrennungsbereich des gemeinsamen Verbrennungs- und Trocknungsraums (201) zu transportieren.

14. Trocknungs- und Verbrennungsvorrichtung (100, 200) gemäß Anspruch 13, wobei
- der gemeinsame Verbrennungs- und Trocknungsraum (201) durch ein oder mehrere Wände begrenzt ist; und
- die Vorrichtung (200) an zumindest einer Wand des gemeinsamen Verbrennungs- und Trocknungsraums (201) im Trocknungsbereich ein Heizelement (203) umfasst, das eingerichtet ist, die Wand und/oder das an die Wand angrenzende Material (231) zu erwärmen.

15. Verfahren (300) zur Trocknung und Verbrennung von Material (131, 132, 231) innerhalb einer kombinierten Trocknungs- und Verbrennungsvorrichtung (100, 200); wobei die Vorrichtung (100, 200) umfasst,
- zumindest einen Raum (101, 102, 201) zur Aufnahme von Material (131, 132, 231);
- zumindest einen Zuteiler (105, 106, 207), über den Material (131, 132, 231) in den zumindest einen Raum (101, 102, 201) einführbar ist;
- zumindest einen Austrag (107, 108, 208), über den verarbeitetes Material (133, 134, 233), das in dem zumindest einen Raum (101, 102, 201) getrocknet und/oder verbrannt wurde, aus dem zumindest einen Raum (101, 102, 201) geleitet werden kann; und
- eine Reihe von Drehmitnehmern (110, 117, 202), die eingerichtet sind, das dem zumindest einen Raum (101, 102, 201) zugeführte Material (131, 132, 231) von dem Zuteiler (105, 106, 207) durch den zumindest einen Raum (101, 102, 201) zu dem Austrag (107, 108, 208) zu transportieren; und
wobei das Verfahren (300) umfasst,
- Zuführen (301) von Material (131, 132, 231) in den zumindest einen Raum (101, 102, 201); wobei das Material (131, 132, 231) in dem zumindest einen Raum (101, 102, 201) zumindest teilweise getrocknet und zumindest teilweise verbrannt wird; und
- Nutzen (302) von thermischer Energie, die bei der Verbrennung eines ersten Teils des Materials (131, 132, 231) entsteht, zur Trocknung eines zweiten Teils des Materials (131, 132, 231).
